# EUROPEAN PATENT SPECIFICATION

(11) **EP 3 965 624 B1**
(45) Date of publication and mention of the grant of the patent: **14.06.2023**
(21) Application number: 20737031.3
(22) Date of filing: 10.07.2020
(51) Int. Cl.: A47J 31/44

(54) **MILK FROTHER**
MILCHAUFSCHÄUMER
MOUSSEUR À LAIT

(30) Priority: 18.07.2019 IT 201900012312; 10.01.2020 IT 202000000292
(43) Date of publication of application: 16.03.2022
(73) Proprietor: De'Longhi Appliances S.r.l., 31100 Treviso (IT)
(72) Inventor: PANCIERA, Antonio, 31100 Treviso (IT); ROSETTA, Simone, 31100 Treviso (IT)
(74) Representative: Rapisardi, Mariacristina
(86) International application number: PCT/EP2020/069524
(87) International publication number: WO 2021/009032

(56) References cited:
- EP-A1- 1 197 175
- WO-A1-2012/029047
- WO-A1-2012/107357
- DE-A1-102004 063 285
- DE-U1-202007 009 537

## Description

The present invention relates to a milk frother that is associable with a steam dispenser of a coffee machine.

In particular, the present invention relates to a Venturi-effect milk frother.

Different types of milk frothers are known that are or are not integrated into a coffee machine that comprise a mixing chamber, a steam inlet route, a Venturi-effect air suction route, a Venturi-effect milk suction route and an outlet route of the milk emulsified with steam and/or air.

Generally, in milk frothers of normal type, the Venturi-effect milk suction route comprises a milk suction tube for sucking milk from a container that is always in fluid communication with the mixing chamber.

Usually, the milk frothers known from the prior art consist of a plurality of component that are assembled together for sale and are not dismantlable or separable after purchase.

In a milk emulsifying cycle, the milk is sucked from a container and mixed with air and with steam at a high temperature to form the characteristic foam or can be mixed only with high temperature steam to be heated and is then dispensed to the same container from which it was taken.

In milk frothers of known type, after use, some drops of milk, or milk residues, may remain trapped inside the mixing chamber and in the milk suction route, for example in the part of the suction route proximal to the mixing chamber or in the suction tube in direct contact with the milk to be mixed.

In one drawback, these milk residues generate incrustations and fertile environments for the potential development of bacteria.

This entails a possible deterioration of the organoleptic properties of a subsequent mixing cycle of fresh milk and resulting dissatisfaction of the customer who purchased the product.

According to a further aspect, in milk frothers of known type, the milk suction route in the mixing chamber usually comprises a milk suction tube with the sole function of sucking up the milk from the bottom of a container placed near the coffee machine.

In the prior art, complex solutions are known for cleaning milk frothers that provide suction cycles of only water or a water-detergent solution and emission cycles of only steam following each use.

WO 2012/107357 A1 and DE 20 2007 009 537 U1 disclose a milk frother associable with a dispenser of a flow of steam of a coffee machine for the production of a milk-based comestible liquid according to the preamble of claim 1.

One object of the present invention is to make a milk frother that is associable with a coffee machine that solves the aforesaid problems of the prior art, in particular that prevents the accumulation of milk residues inside the components of the milk frother after use.

A further object of the present invention is to provide a milk frother that permits the milk frother to be washed easily and intuitively.

Another object of the present invention is to provide a milk frother with great versatility of use and alternative uses for increasing the facility of the experience of tasting a beverage that includes frothed milk.

The technical task, as well as these and other objects according to the present invention are achieved by a milk frother according to independent claim 1. Preferred embodiments of the invention are the subject-matter of the dependent claims.

According to the invention, said mechanical stirring means is supported outside at least one part of said milk suction channel.

Said part of said milk suction channel preferably comprises the milk inlet end.

Preferably, said mechanical stirring means is positioned at said milk inlet end.

Said mechanical stirring means preferably comprises a blade.

Said mixing chamber is preferably delimited by a mixing body comprising a male coupling body and a female coupling body releasably engaged sealingly with one another.

Preferably, said releasable part of milk frother including at least one part of said milk suction channel is releasable from said mixing body.

Further characteristics and advantages of the invention will more fully emerge from the description of a preferred but not exclusive embodiment of the milk frother according to the invention, illustrated by way of non-limiting example in the appended drawings, wherein:
- figure 1 shows a perspective view of the milk frother associated with a coffee machine;
- figure 2 shows a perspective view of the milk frother associated with a coffee machine in which the releasable parts of the milk frother are shown;
- figure 3 shows an exploded view of the components of a first embodiment of the milk frother according to the invention;

- figure 4 shows a section view of an assembled milk frother of figure 3;
- figure 5 shows an exploded view of the components of a second embodiment of the milk frother according to the invention;
- figure 6 shows a section view of an assembled milk frother of figure 5;
- figure 7 shows a section view of the milk frother of figures 5 and 6 associated with a coffee machine;
- figure 8 shows a frontal view of the milk frother according to the invention in which the milk frother operates in a container containing milk directly below a coffee dispensing unit of a coffee machine;
- figure 9 shows a milk frother according to the invention having an advantageous releasable coupling solution of the releasable part;
- figure 10 shows an exploded view of the milk frother of figure 9;
- figure 11 shows a section of the milk frother of figure 9.

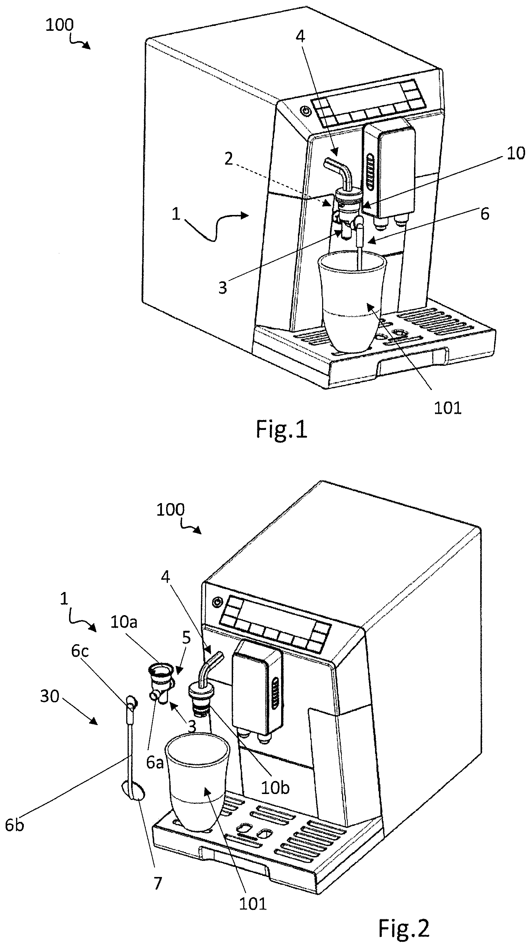

With reference to the cited figures 1 to 8, a milk frother is shown that is generally indicated by number 1.

The milk frother 1 is of the type that is associable with a dispenser of a flow of steam of a coffee machine 100.

The milk frother 1 comprises a Venturi-effect mixing chamber 2 that has three inlet openings and an outlet opening for producing hot milk, possibly with foam.

In particular, the milk frother 1 comprises a milk outlet channel 3 from the mixing chamber 2, a steam inlet chamber 4 in the mixing chamber 2, an air intake channel, in particular a Venturi- effect air suction channel 5 in the mixing chamber 2, a Venturi- effect milk suction channel 6 in the mixing chamber 2.

In particular, the steam inlet channel 4 is connected to said dispenser of a flow of steam of the coffee machine and acts as a support constraint for the milk frother 1 that is accordingly aerially suspended with respect to a resting surface of the coffee machine.

Preferably, the steam inlet channel 4 is rotatably connected to said dispenser of a flow of steam, in this manner the milk frother 1 is orientable.

The milk suction channel 6 comprises a milk inlet end 8 configured to suck milk from a container 101, for example a cup or a glass as shown in the figures.

Preferably, the milk inlet end 8 is positioned near the bottom of the container 101 so as to suck up effectively the greatest possible liquid content.

The milk frother 1 comprises at least one releasable part 30 provided outside with mechanical stirring means 7.

In greater detail, the releasable part 30 comprises at least one part of the milk suction channel 6 provided outside with said mechanical stirring means 7.

In particular, the releasable part 30 comprises the milk inlet end 8.

In greater detail, the mechanical stirring means 6 is positioned at the milk inlet end 8 of the milk suction channel 6.

It should be noted that the releasable part 30 is dismantlable from the milk frother for independent use thereof as a tool.

For example, the releasable part 30 is usable as a stirrer of the milk, or also as spoon for tasting the milk, or also as a straw for drinking the milk.

In one preferred embodiment, the mechanical stirring means 7 comprises a blade.

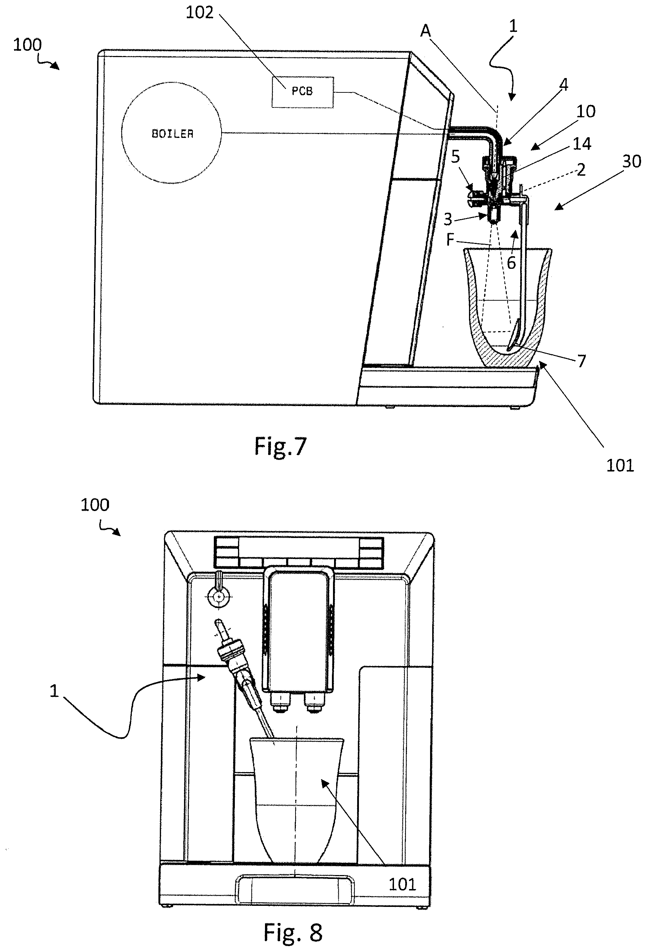

With particular reference to figure 7, with letter F is illustrated an opening cone of an outlet flow of the milk from the milk frother 1.

It should be noted that the mechanical stirring means 7 is arranged below the milk outlet channel 3 in a position interfering with the opening cone of the outlet flow F of the milk from the outlet channel.

In this manner, the mechanical stirring means 7 enables the flow of milk to be deviated so as to obtain more uniform mixing of the milk present in the container 101.

In addition, the blade is preferably interposed between the outlet flow F of the milk and the milk inlet end 8 so as to create a circuit that is even more tortuous that involves even more uniformly all the milk contained in the container to be sucked.

With reference to the figures, the milk suction channel 6 comprises a proximal part 6a connected in a fixed manner to the mixing chamber and at least one distal part 6b connected rotatably to said proximal part 6a.

In particular, the distal part 6b comprises the milk inlet end 8 and said mechanical stirring means 7 and can oscillate with respect to the proximal part 6a and thus with respect to the mixing chamber 2.

In this manner, convenient and simple insertion of said distal part 6b inside the container 101 is permitted.

Preferably, the distal part 6b is included in the releasable part 30.

In a preferred embodiment of the invention, the milk suction channel 6 comprises an angular connection 6c between said distal part 6b and said proximal part 6a.

In particular, the angular connection 6c comprises a male connecting portion and a female connecting portion, that are respectively connected to the proximal part 6a and to the distal part 6b.

The connection 6c has a connection angle comprised between 45 degrees and 90 degrees. Preferably, the connection angle is 90 degrees.

The connection 6c has a tab 9 externally protruding from the outer surface thereof. The tab 9 enables the distal part 6b of the milk suction channel 6 to be handled conveniently.

According to a preferred solution of the invention, also the connection 6c is included in the releasable part 30.

With reference to the figures, the steam inlet chamber 4 comprises a distal part 4b oriented substantially horizontally and connected rotatably to said steam dispenser and at least one proximal part 4a oriented vertically and connected to the mixing chamber.

According to one preferred embodiment, the mixing chamber 2 is delimited by a mixing body 10 comprising a male coupling body 10a and a female coupling body 10b releasably engaged sealingly with one another.

In particular, the male coupling body 10a comprises said proximal part 4a of the steam inlet channel 4, and the female coupling body 10b comprises a hollow housing portion of the male coupling body 101, the air suction channel 5, the liquid outlet channel 3 and the proximal part 6a of the milk suction channel 6.

Preferably, the male coupling body 10a and the female coupling body 10b are coupled together sealingly and are dismantlable by a bayonet coupling system.

The female coupling body 10b is thus releasably from the male coupling body 10a, thus enabling the mixing chamber to be opened for thorough and simple cleaning.

The distal part 4a of the steam inlet channel 4 comprises an axis of extension A around which said mixing body 10 is rotatable.

It must be pointed out that the releasable part 30 of the milk frother 1 is releasably from said mixing body 10.

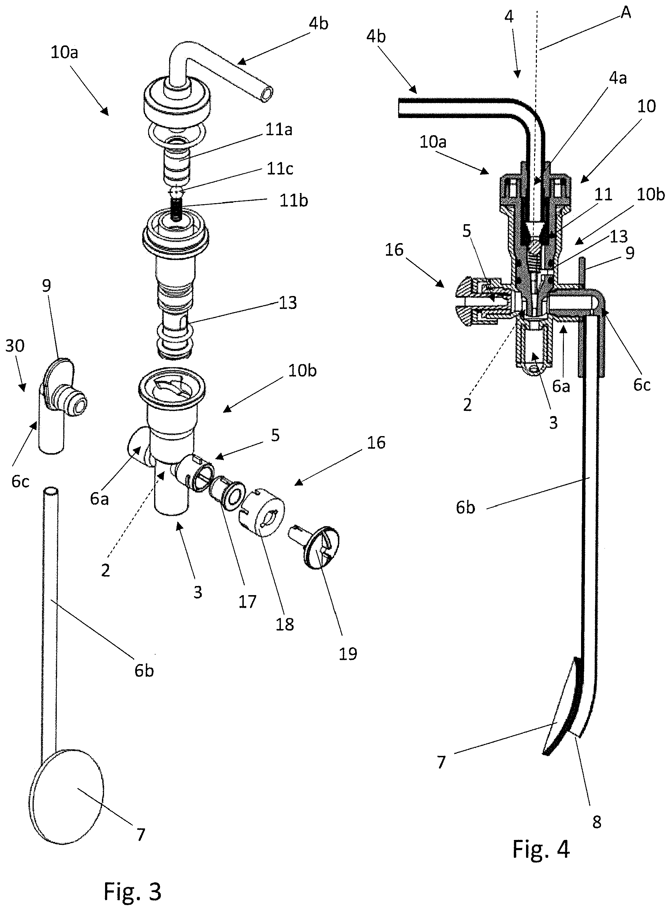

With particular reference to figures 3-4 and 5-6, are shown two preferred embodiments of the milk frother 1 according to the present invention .

It should be noted that the male coupling body 10a comprises a retaining valve 11 configured to enable the steam to pass into the steam inlet chamber 4 only through the mixing chamber 2 and prevent a flow of milk to the steam inlet channel.

In particular, the retaining valve 11 is arranged in a suitable seat made inside the proximal part 4a of the steam inlet chamber 4.

In the particular embodiment the retaining valve 11 is made by a suitably shaped sleeve 11a into which a spring 11b and a ball 11c are inserted, the sleeve 11a being housed inside the proximal part 4a of the steam inlet channel 4.

The ball 11c is arranged to close the proximal part 4a of the steam inlet chamber 4 by the contrasting action of the spring 11b.

In the presence of a flow of steam from said steam dispenser of a coffee machine, under the thrust of this flow of steam the action of the spring 11b is overcome and the ball 11c opens the proximal part 4a of the steam inlet chamber 4.

On the other hand, a flow of fluid in the opposite direction is prevented by the presence of the ball 11c closing the proximal part 4a of the steam inlet channel 4.

The male coupling body 10a comprises a tapered end part that delimits the mixing chamber.

It should be noted that the male coupling body 10a comprises a connecting opening 13 connecting the proximal part 4a of the inlet channel 4 with external environment, the connecting opening 13 being arranged between the tapered end part and said retaining valve 11.

Once the male coupling body 10a and the female coupling body 10b have been disconnected, this connecting opening 13 allows the cleaning and emptying of any residual milk-based liquid that is present in the steam inlet channel 4 part downstream of the retaining valve 11.

In one preferred embodiment, the milk frother 1 comprises a temperature sensor 14 configured to detect the temperature of the milk sucked into said mixing chamber 2.

Said temperature sensor 14 is connected to a control unit 102 of a coffee machine 100.

Accordingly, by setting a desired temperature of the milk, the control unit 102 of the coffee machine 100 maintains the operation of the milk frother 1 active until this desired temperature has been detected.

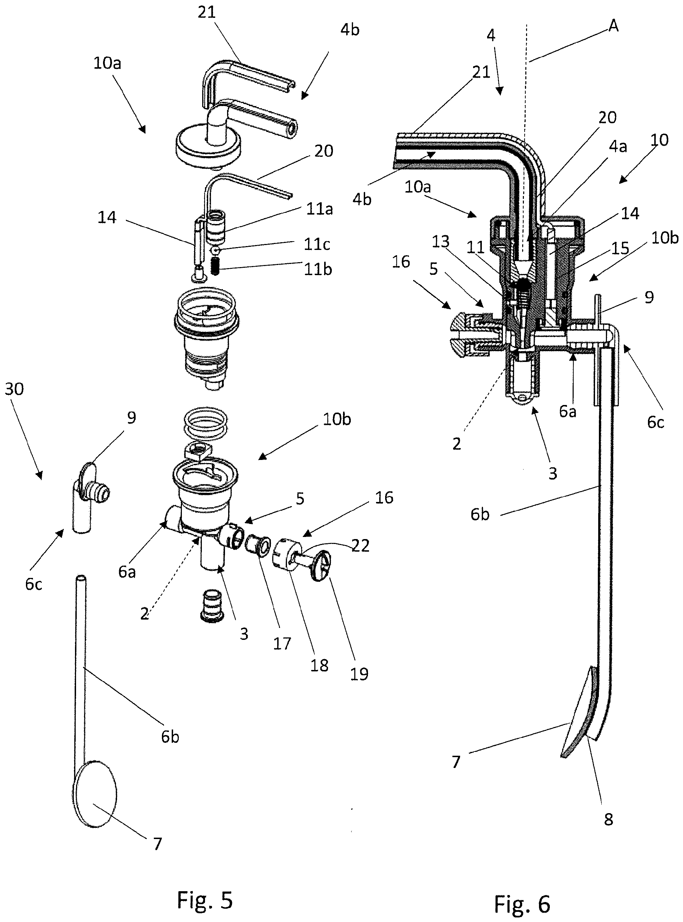

With particular reference to figures 5 and 6, the male coupling body 10a comprises a housing seat 15 in which the temperature sensor 14 is housed.

In particular, this housing seat 15 has an opening facing the proximal part 6a of the milk suction channel 6.

The temperature sensor 14 is engaged sealingly in said housing seat 15 and has an active measuring part facing the inside of the proximal part 6a of the milk suction channel 6.

In the embodiment shown in figures 5 and 6, the temperature sensor 14 has at least one electrical connection cable 20 with a control unit 102 of the coffee machine.

The electrical connection cable 20 is housed in a suitable cable sheath 21 that extends outside the part of the steam inlet channel 4 upstream of the male coupling body 10a.

According to a further aspect of the invention, the air suction channel 5 comprises an air flow adjustment valve 16 inside the mixing chamber.

The adjustment valve 16 is of manual type and configured to vary the air flow from a minimum flow condition to a maximum flow condition.

In this manner, it is possible to obtain different levels of frothing of the liquid based on mixed milk.

Preferably, the minimum flow condition coincides with zero air flow.

The adjustment valve 16 comprises a hollow cylindrical body 17, a fixing cover 18 of the hollow body 17 and a knob 19 arranged in a position that is coaxial with the air suction channel 5.

The hollow cylindrical body 17 is arranged inside the air suction channel 5 and has on the perimeter on the inner surface an O-ring seal (not shown) that is tilted with respect to the direction of axial extension of the cylindrical body 17.

The fixing cover 18 is coupled with the end of the air suction channel 5 and has a passage and support opening for a hollow stem of the knob 19.

The side wall of the hollow stem of the knob 19 has a slot 22 of triangular shape that with the tilted seal defines an air passage with variable configuration from the outer environment to the mixing chamber 2a.

Rotation of the knob 19 in fact enables the area of the passage to be varied.

In particular, by rotating the knob 19, the tilted seal position is varied with respect to the triangular slot 22 with a consequent modulation of the passage area: when the tilted seal is staggered by the triangular slot 22 the passage is closed and there is no entry of air so that the milk is not frothed; when on the other hand the seal is superimposed on the triangular slot 22 the passage is open and the degree of frothing of the milk is proportional to the passage area.

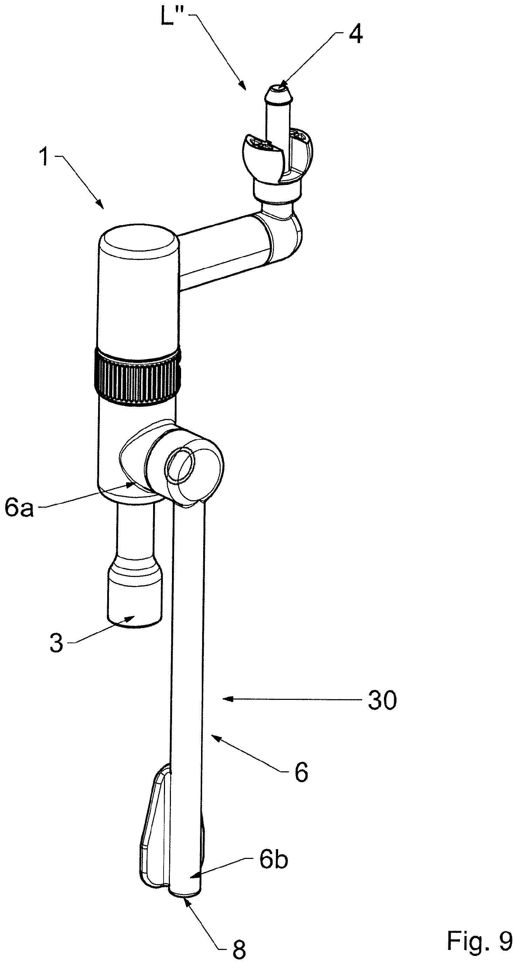

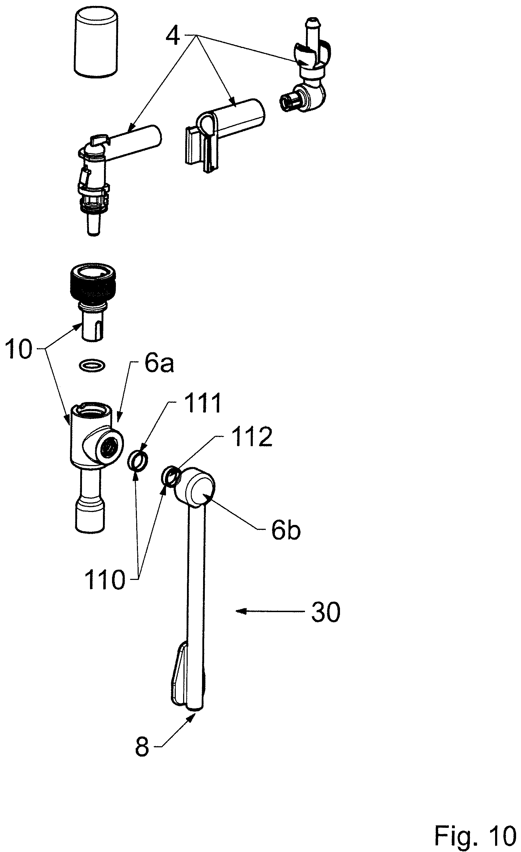

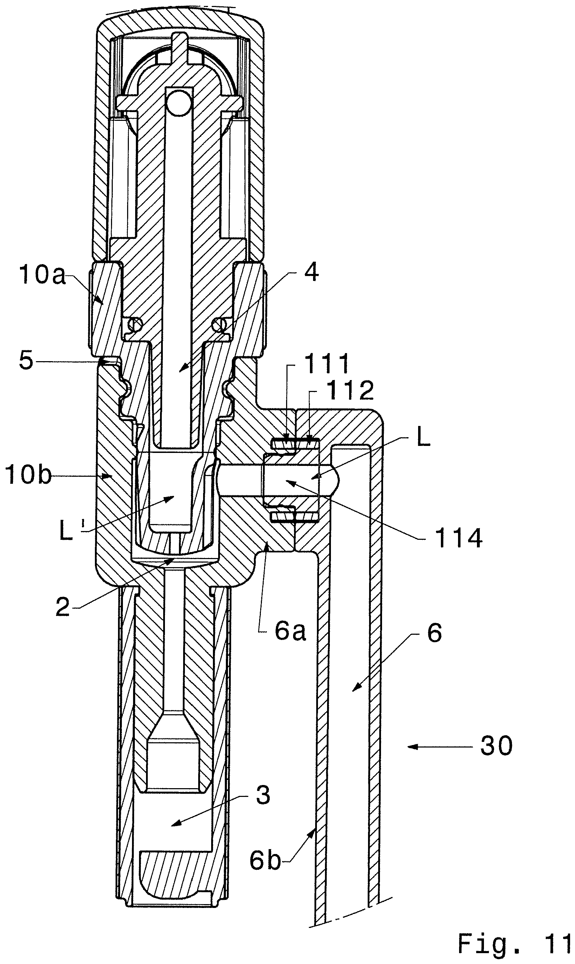

Reference is now made to the milk frother object of the invention an embodiment of which is shown in figures 9-11.

Equivalent elements to the milk frother disclosed previously will be indicated by the same reference number.

The milk frother 1 is of the type that is associable with a dispenser of a flow of steam of a coffee machine.

The milk frother 1 comprises a Venturi-effect mixing chamber 2 that has three inlet openings and an outlet opening for producing hot milk, possibly with foam.

In particular, the milk frother 1 comprises a milk outlet channel 3 from the mixing chamber 2, a steam inlet chamber 4 in the mixing chamber 2, an air intake channel, in particular a Venturi- effect air suction channel 5 in the mixing chamber 2, a Venturi- effect milk suction channel 6 in the mixing chamber 2.

In particular, the steam inlet channel 4 is connected to the dispenser of a flow of steam of the coffee machine and acts as a support constraint for the milk frother 1 that is accordingly aerially suspended with respect to a resting surface of the coffee machine.

Preferably, the steam inlet channel 4 is rotatably connected to said dispenser of a flow of steam, in this manner the milk frother 1 is orientable.

In this case, a connection is provided that is rotatable according to a vertical axis L".

The milk suction channel 6 comprises a milk inlet end 8 configured to suck milk from a container.

The milk frother 1 comprises at least one releasable part 30 provided outside with mechanical stirring means 7.

In greater detail, the releasable part 30 comprises at least one part of the milk suction channel 6 provided outside with said mechanical stirring means 7.

In particular, the releasable part 30 comprises a distal part 6b of the suction channel 6 including the milk inlet end 8.

It should be noted that the releasable part 30 is dismantlable from the milk frother for independent use thereof as a tool.

For example, the releasable part 30 is usable as a stirrer of the milk, or also as a spoon for tasting the milk, or also as a straw for drinking the milk.

In one preferred embodiment, the mechanical stirring means 7 comprises a blade.

Advantageously, releasable coupling magnetic means 110 of the releasable part 30 are provided.

The magnetic means 110 couple the distal part 6b of the milk suction channel 6 to a proximal part 6a of the milk suction channel 6 connected in a fixed manner to the mixing chamber 2.

The magnetic means 110 are incorporated in the distal part 6b and in the proximal part 6a of the milk suction channel 6.

The magnetic means 110 comprise at least one first magnetic element 111 consisting of a permanent magnet and a second magnetic element 112 consisting of a ferromagnet or a permanent magnet.

The first magnetic element 111 and the second magnetic element 112 in the embodiment shown circumscribe the inner lumen 114 of the milk suction channel 6.

The first magnetic element 111 and the second magnetic element 112 in the embodiment shown engage the proximal part 6a and the distal part 6b rotatably around the axis L of the milk suction channel 6.

In the specific case the first magnetic element 111 and the second magnetic element 112 engage the proximal part 6a and the distal part 6b rotatably around a proximal horizontal section of the axis L of the milk suction channel 6 having a distal section oriented at 90° with respect to the proximal section.

The first magnetic element 111 and the second magnetic element 112 are more precisely axially hollow coaxial cylindrical elements.

In the illustrated case the first magnetic element 111 and the second magnetic element 112 face the juxtaposed front outer surfaces of the proximal part 6a and of the distal part 6b.

Further, the first magnetic element 111 and the second magnetic element 112 have front contact surfaces that also create the fluid seal between the proximal part 6a and the distal part 6b.

Alternatively, suitable fluid seal rings can be provided that are interposed between the juxtaposed front outer surfaces of the proximal part 6a and of the distal part 6b.

Further, in a solution that is not shown, for questions of compatibility with the contact with food products, the first magnetic element 111 and the second magnetic element 112 can be entirely integrated in the proximal part 6a and in the distal part 6b or have a suitable cladding that prevents contact with the milk.

The mixing chamber 2 is delimited by a mixing body 10 comprising a male coupling body 10a and a female coupling body 10b engaged rotatably with one another according to a connection axis L'.

The male coupling body 10a and the female coupling body 10b delimit the air suction channel 5 that has the inner lumen variable by relative rotation between the male coupling body 10a and the female coupling body 10b around the connection axis L' thereof.

The variation of the inner lumen is associated with a variation in the quantity of aspirated air and consequently with a variation in the produced quantity of foam in the milk.

In a relative angular position between the male coupling body 10a and the female coupling body 10b the inner lumen of the air suction channel 5 is completely closed for the production of hot milk without foam.

The female coupling body 10b is engaged in a disengageable manner with the male coupling body 10a, which is in turn engaged in a disengageable manner with the steam inlet channel 4 which is in turn made of different parts that are disengageably engaged with one another.

In this manner, it is possible to open the mixing chamber 2 for thorough and simple cleaning.

The milk frother 1 as conceived herein is susceptible to numerous modifications and variants, all falling within the scope of the inventive concept as defined by the appended claims.

In practice, the materials used, as well as the dimensions, can be any according to the needs and the state of the art.

## Claims

1. A milk frother (1) associable with a dispenser of a flow of steam of a coffee machine (100) for the production of a milk-based comestible liquid, comprising a Venturi-effect mixing chamber (2), an outlet channel (3) for the liquid from the mixing chamber (2), a steam inlet channel (4) in said mixing chamber (2), a channel (5) for the intake of air into said mixing chamber (2), a Venturi-effect milk suction channel (6) in said mixing chamber (2), **characterized in that** it comprises at least one releasable part (30) of said milk frother (1) including at least one part of said milk suction channel (6), said releasable part (30) being further provided with mechanical stirring means (7).

2. The milk frother (1) according to the preceding claim, **characterized in that** said mechanical stirring means (7) is supported outside said at least one part of said milk suction channel (6).

3. The milk frother (1) according to any preceding claim, wherein said milk suction channel (6) comprises a milk inlet end (8), **characterized in that** said releasable part (30) comprises said milk inlet end (8).

4. The milk frother (1) according to the preceding claim, **characterized in that** said mechanical stirring means (7) is positioned at said milk inlet end (8).

5. The milk frother (1) according to any preceding claim **characterized in that** said mechanical stirring means (7) comprises a blade.

6. The milk frother (1) according to any preceding claim, **characterized in that** said mechanical stirring means (7) is arranged below said outlet channel (3) for the liquid in a position interfering with an opening cone (F) of an outlet flow of said liquid from said outlet channel (3).

7. The milk frother (1) according to any preceding claim, **characterized in that** said milk suction channel (6) comprises a proximal part (6a) connected in a fixed manner to the mixing chamber (2), and at least one distal part (6b) rotatably connected to said proximal part (6a), said releasable part (30) comprising said distal part (6b).

8. The milk frother (1) according to the preceding claim, **characterized in that** said milk suction channel (6) comprises an angular connection (6c) between said distal part (6b) and said proximal part (6a), said releasable part comprising said angular connection (6c) and said distal part (6b).

9. The milk frother (1) according to any preceding claim, **characterized in that** said mixing chamber (2) is delimited by a mixing body (10) comprising a male coupling body (10a) and a female coupling body (10b) releasably engaged sealingly with one another.

10. The milk frother (1) according to the preceding claim in which said releasable part (30) of a milk frother (1) is releasable from said mixing body (10).

11. The milk frother (1) according to claim 9, **characterized in that** said female coupling body (10b) and said male coupling body (10a) are sealingly coupled and dismantlable by a bayonet coupling system.

12. The milk frother (1) according to any one of claims 9 to 11, **characterized in that** said male coupling body (10a) comprises a retaining valve (11) configured for permitting the passage of steam into the steam inlet channel (4) only to the mixing chamber (2) and preventing a flow of milk to said steam inlet channel (4).

13. The milk frother (1) according to any preceding claim comprising a temperature sensor (14) configured for detecting the temperature of the milk suctioned into said mixing chamber (2).

14. The milk frother (1) according to the preceding claim and any claim 9 to 12, **characterized in that** said male coupling body (10a) comprises a housing seat (15) in which said temperature sensor (14) is housed.

15. The milk frother (1) according to any preceding claim **characterized in that** magnetic means (110) are provided for releasable hooking of said releasable part (30).

## Patentansprüche

1. Milchaufschäumer (1), der mit einem Spender eines Dampfstroms einer Kaffeemaschine (100) zur Herstellung einer auf Milch basierenden Speiseflüssigkeit assoziiert werden kann, umfassend eine Venturi-Effekt-Mischkammer (2), einen Auslasskanal (3) für die Flüssigkeit aus der Mischkammer (2), einen Dampfeinlasskanal (4) in der Mischkammer (2), einen Kanal (5) für den Eintritt von Luft in die Mischkammer (2), einen Venturi-Effekt-Milchansaugkanal (6) in der Mischkammer (2), **dadurch gekennzeichnet, dass** er mindestens einen lösbaren Teil (30) des Milchaufschäumers (1) umfasst, der mindestens einen Teil des Milchansaugkanals (6) einschließt, wobei der lösbare Teil (30) außerdem mit mechanischen Rührmitteln (7) versehen ist.

2. Milchaufschäumer (1) nach dem vorhergehenden Anspruch, **dadurch gekennzeichnet, dass** die mechanischen Rührmittel (7) außerhalb des mindestens einen Teils des Milchansaugkanals (6) abgestützt sind.

3. Milchaufschäumer (1) nach einem der vorhergehenden Ansprüche, wobei der Milchansaugkanal (6) ein Milcheinlassende (8) umfasst, **dadurch gekennzeichnet, dass** der lösbare Teil (30) das Milcheinlassende (8) umfasst.

4. Milchaufschäumer (1) nach dem vorhergehenden Anspruch, **dadurch gekennzeichnet, dass** die mechanischen Rührmittel (7) an dem Milcheinlassende (8) positioniert sind.

5. Milchaufschäumer (1) nach einem der vorhergehenden Ansprüche, **dadurch gekennzeichnet, dass** die mechanischen Rührmittel (7) eine Klinge umfassen.

6. Milchaufschäumer (1) nach einem der vorhergehenden Ansprüche, **dadurch gekennzeichnet, dass** die mechanischen Rührmittel (7) unterhalb des Auslasskanals (3) für die Flüssigkeit in einer Position angeordnet sind, die mit einem Öffnungskonus (F) eines Auslassstroms der Flüssigkeit aus dem Auslasskanal (3) interferiert.

7. Milchaufschäumer (1) nach einem der vorhergehenden Ansprüche, **dadurch gekennzeichnet, dass** der Milchansaugkanal (6) einen proximalen Teil (6a), der fest mit der Mischkammer (2) verbunden ist, und mindestens einen distalen Teil (6b) umfasst, der drehbar mit dem proximalen Teil (6a) verbunden ist, wobei der lösbare Teil (30) den distalen Teil (6b) umfasst.

8. Milchaufschäumer (1) nach dem vorhergehenden Anspruch, **dadurch gekennzeichnet, dass** der Milchansaugkanal (6) eine Winkelverbindung (6c) zwischen dem distalen Teil (6b) und dem proximalen Teil (6a) umfasst, wobei der lösbare Teil die Winkelverbindung (6c) und den distalen Teil (6b) umfasst.

9. Milchaufschäumer (1) nach einem der vorhergehenden Ansprüche, **dadurch gekennzeichnet, dass** die Mischkammer (2) durch einen Mischkörper (10) begrenzt ist, der einen männlichen Kupplungskörper (10a) und einen weiblichen Kupplungskörper (10b) umfasst, die lösbar und abdichtend miteinander eingegriffen sind.

10. Milchaufschäumer (1) nach dem vorhergehenden Anspruch, wobei der lösbare Teil (30) eines Milchaufschäumers (1) vom Mischkörper (10) lösbar ist.

11. Milchaufschäumer (1) nach Anspruch 9, **dadurch gekennzeichnet, dass** der weibliche Kupplungskörper (10b) und der männliche Kupplungskörper (10a) durch ein Bajonettkupplungssystem abdichtend gekoppelt und demontierbar sind.

12. Milchaufschäumer (1) nach einem der Ansprüche 9 bis 11, **dadurch gekennzeichnet, dass** der männliche Kupplungskörper (10a) ein Rückhalteventil (11) umfasst, das so ausgelegt ist, dass es den Durchgang von Dampf in den Dampfeinlasskanal (4) nur zur Mischkammer (2) zulässt und einen Strom von Milch zum Dampfeinlasskanal (4) verhindert.

13. Milchaufschäumer (1) nach einem der vorhergehenden Ansprüche, umfassend einen Temperatursensor (14), der zum Erfassen der Temperatur der in die Mischkammer (2) angesaugten Milch ausgelegt ist.

14. Milchaufschäumer (1) nach dem vorhergehenden Anspruch und einem der Ansprüche 9 bis 12, **dadurch gekennzeichnet, dass** der männliche Kupplungskörper (10a) einen Gehäusesitz (15) umfasst, in dem der Temperatursensor (14) untergebracht ist.

15. Milchaufschäumer (1) nach einem der vorhergehenden Ansprüche, **dadurch gekennzeichnet, dass** Magnetmittel (110) zum lösbaren Einhaken des lösbaren Teils (30) vorgesehen sind.

## Revendications

1. Mousseur à lait (1) associable à un distributeur de flux de vapeur d'une machine à café (100) pour la production d'un liquide comestible à base de lait, comprenant une chambre de mélange à effet Venturi (2), un canal de sortie (3) pour le liquide provenant de la chambre de mélange (2), un canal d'admission de vapeur (4) dans ladite chambre de mélange (2), un canal (5) pour l'admission d'air dans ladite chambre de mélange (2), un canal d'aspiration de lait à effet Venturi (6) dans ladite chambre de mélange (2), **caractérisé en ce qu'**il comprend au moins une partie amovible (30) dudit mousseur à lait (1) incluant au moins une partie dudit canal d'aspiration de lait (6), ladite partie amovible (30) étant de plus pourvue de moyens d'agitation mécaniques (7).

2. Mousseur à lait (1) selon la revendication précédente, **caractérisé en ce que** lesdits moyens d'agitation mécaniques (7) sont supportés à l'extérieur de ladite au moins une partie dudit canal d'aspiration de lait (6).

3. Mousseur à lait (1) selon l'une quelconque des revendications précédentes, dans lequel ledit canal d'aspiration de lait (6) comprend une extrémité d'entrée de lait (8), **caractérisé en ce que** ladite partie amovible (30) comprend ladite extrémité d'entrée de lait (8).

4. Mousseur à lait (1) selon la revendication précédente, **caractérisé en ce que** les moyens d'agitation mécaniques (7) sont positionnés en correspondance de l'extrémité d'entrée de lait (8).

5. Mousseur à lait (1) selon l'une quelconque des revendications précédentes, **caractérisé en ce que** lesdits moyens d'agitation mécaniques (7) comprennent une lame.

6. Mousseur à lait (1) selon l'une quelconque des revendications précédentes, **caractérisé en ce que** lesdits moyens d'agitation mécaniques (7) sont disposés sous ledit canal de sortie (3) du liquide dans une position interférant avec un cône d'ouverture (F) d'un flux de sortie dudit liquide à partir dudit canal de sortie (3).

7. Mousseur à lait (1) selon l'une quelconque des revendications précédentes, **caractérisé en ce que** ledit canal d'aspiration de lait (6) comprend une partie proximale (6a) reliée de manière fixe à la chambre de mélange (2), et au moins une partie distale (6b) reliée en rotation à ladite partie proximale (6a), ladite partie amovible (30) comprenant ladite partie distale (6b).

8. Mousseur à lait (1) selon la revendication précédente, **caractérisé en ce que** ledit canal d'aspiration de lait (6) comprend un raccordement angulaire (6c) entre ladite partie distale (6b) et ladite partie proximale (6a), ladite partie amovible comprenant ledit raccordement angulaire (6c) et ladite partie distale (6b).

9. Mousseur à lait (1) selon l'une quelconque des revendications précédentes, **caractérisé en ce que** ladite chambre de mélange (2) est délimitée par un corps de mélange (10) comprenant un corps de couplage mâle (10a) et un corps de couplage femelle (10b) mis en prise de manière amovible et étanche l'un par rapport à l'autre.

10. Mousseur à lait (1) selon la revendication précédente, dans lequel ladite partie amovible (30) d'un mousseur à lait (1) est amovible dudit corps de mélange (10).

11. Mousseur à lait (1) selon la revendication 9, **caractérisé en ce que** ledit corps de couplage femelle (10b) et ledit corps de couplage mâle (10a) sont couplés de manière étanche et démontables par un système de couplage à baïonnette.

12. Mousseur à lait (1) selon l'une quelconque des revendications 9 à 11, **caractérisé en ce que** ledit corps de couplage mâle (10a) comprend une soupape de retenue (11) configurée pour permettre le passage de la vapeur dans le canal d'entrée de vapeur (4) uniquement vers la chambre de mélange (2) et empêcher un écoulement de lait vers ledit canal d'entrée de vapeur (4).

13. Mousseur à lait (1) selon l'une quelconque des revendications précédentes, comprenant un capteur de température (14) configuré pour détecter la température du lait aspiré dans ladite chambre de mélange (2).

14. Mousseur à lait (1) selon la revendication précédente et selon l'une quelconque des revendications 9 à 12, **caractérisé en ce que** ledit corps de couplage mâle (10a) comprend un siège de logement (15) dans lequel est logé ledit capteur de température (14).

15. Mousseur à lait (1) selon l'une quelconque des revendications précédentes, **caractérisé en ce que** des moyens magnétiques (110) sont prévus pour l'accrochage amovible de ladite partie amovible (30) .
